# FASCICULE DE BREVET EUROPEEN

(11) **EP 3 029 968 B1**
(45) Date de publication et mention de la délivrance du brevet: **31.07.2019**
(21) Numéro de dépôt: 15197121.5
(22) Date de dépôt: 30.11.2015
(51) Int. Cl.: H04W 8/18, H04W 8/20, H04W 4/50

(54) **PROCEDE DE PROVISIONNEMENT D'UN PROFIL DE SOUSCRIPTEUR POUR UN MODULE SECURISE**
VERFAHREN ZUM BEREITSTELLEN EINES USERPROFILS IN EINEM SICHEREN MODUL
METHOD FOR PROVISIONING A SUBSCRIBER PROFILE INSIDE A SECURE MODULE

(30) Priorité: 04.12.2014 FR 1461910
(43) Date de publication de la demande: 08.06.2016
(73) Titulaire: IDEMIA France, 92700 Colombes (FR)
(72) Inventeur: LARIGNON, Guillaume, 92700 Colombes (FR); DANREE, Arnaud, 92700 Colombes (FR)
(74) Mandataire: Delumeau, François Guy

(56) Documents cités:
- EP-A1- 2 615 543
- US-A1- 2013 012 159
- US-A1- 2013 217 361

## Description

Le domaine de l'invention concerne un procédé de provisionnement d'un profil de souscripteur à un terminal comprenant un module sécurisé, le terminal et un serveur de provisionnement de profils d'un souscripteur.

Actuellement, un terminal de communication mobile comprend un module sécurisé pour héberger un ou plusieurs profils d'un souscripteur à des services. Dans le cas d'un téléphone cellulaire, le service de base est proposé par un opérateur (également appelé par l'acronyme MNO pour « Mobile Network Operator » en anglais) pour l'accès à un réseau de communication mobile pour l'échange d'informations à distance.

Cependant, il est prévu qu'un terminal puisse offrir également l'accès à d'autres services tiers comme par exemple un service de paiement ou un service de télévision payant. Par exemple, une carte virtuelle de paiement d'une banque. Le module sécurisé héberge alors plusieurs profils pour l'accès à divers services.

On entend par le profil d'un souscripteur au moins les identifiants de la ligne du souscripteur, les données cryptographiques nécessaires pour son authentification auprès de l'opérateur du service (clés et algorithmes cryptographiques) et les identifiants de l'opérateur.

Lorsqu'un souscripteur désire rénover son offre de service, il est nécessaire de mettre à jour, ajouter ou remplacer un profil de souscripteur dans le module sécurisé.

Dans le cas d'un téléphone cellulaire, le module sécurisé est une carte amovible SIM (de l'anglais « Subscriber Identity Module » ou appelée plus génériquement UICC pour « Universal Integrated Circuit Card ») qui est remplacée pour bénéficier de l'accès à un réseau de communication mobile d'un autre opérateur.

Dans le cas d'un terminal de type M2M (en anglais « Machine to Machine »), le module sécurisé est soudé au terminal et est donc non amovible. On le désigne couramment par eUICC pour « embedded Universal Integrated Circuit Card » en anglais. Le terminal peut être un véhicule, un dispositif de télémétrie ou tout appareil d'acquisition de données à distance. Il est prévu que le fabricant du terminal propose une solution de mise à jour logicielle à distance du module sécurisé. Pour cela, l'opérateur du service embarqué sur le terminal dispose de moyens de communication sécurisés sans fil pour accéder au module sécurisé et déployer de nouveaux profils d'un souscripteur.

Il est connu dans l'état de la technique des solutions de mise à jour à distance d'un module sécurisé qu'il soit amovible ou non.

La demande de brevet américain US20130012159A1 décrit une solution de déploiement d'un nouveau profil dans un module sécurisé amovible. Le module comprend un premier profil d'amorçage pour établir une première communication permettant de charger un deuxième profil d'un opérateur. Lorsque le deuxième profil est activé, le premier profil est configuré dans un état dormant.

La demande de brevet américain 20140134981A1 décrit un procédé pour mettre à jour le profil du souscripteur ou charger plusieurs profils dans un module sécurisé soudé. Il décrit en particulier les blocs fonctionnels du module sécurisé et du serveur de provisionnement de profils d'un souscripteur permettant la préparation d'un profil d'un souscripteur et son envoi sécurisé tel que spécifié par l'association GSMA (l'acronyme pour « Global System for Mobile Communication Association » en anglais).

La demande de brevet américain US2013217361A1 divulgue un procédé qui permet de mettre à jour des paramètres d'un terminal mobile, tels que par exemple une APN, à la suite d'un changement de profil d'abonné sur la carte SIM dudit terminal.

Ces solutions ne prévoient pas la mise à jour des paramètres de l'environnement d'exploitation du terminal qui sont associés au précédent opérateur. Par exemple, le terminal doit être configuré avec des paramètres lié à son profil de souscripteur pour se connecter à des services de l'opérateur, par exemple une adresse IP sur le réseau internet ou une adresse d'un point d'accès du réseau de communication mobile de l'opérateur pour accéder à un réseau de données de type 4G. Ceci est problématique car le décalage de paramétrage du terminal avec le module sécurisé peut empêcher la première connexion au serveur du nouvel opérateur. Par exemple, si la notification de mise à jour est envoyée via le réseau de données, l'opérateur peut manquer l'information nuisant à la continuité de service pour le client.

Un autre problème peut être que le terminal reste configuré avec le visuel de l'opérateur initial chargé par le fabricant ou l'opérateur de service. Dans ce dernier cas, les paramètres du terminal peuvent être l'image lors du démarrage du terminal, le logo de l'opérateur et les codes couleurs d'interface. Le décalage de paramétrage entre le terminal et le module sécurisé peut induire le client en erreur.

Il existe donc un besoin de résoudre les problèmes précités et de proposer une solution globale de mise à jour d'un terminal garantissant à la fois la mise à jour du module sécurisé et la mise à jour des paramètres du terminal pour garantir au moins la continuité de service au client.

### L'invention

L'invention est définie par les revendications.

Plus précisément, l'invention concerne un procédé de provisionnement d'un profil de souscripteur à un terminal comprenant un module sécurisé destiné à héberger le profil de souscripteur à un réseau de communication mobile et un environnement d'exploitation du terminal.

Selon l'invention, le procédé comprend les étapes successives suivantes exécutées par le terminal:
- la réception d'une requête de provisionnement issue d'un serveur distant comprenant au moins le profil de souscripteur et des paramètres du terminal associés au profil,
- le chargement du profil de souscripteur dans le module sécurisé,
- la réception d'une première notification de l'activation du profil dans le module sécurisé issue du module sécurisé,
- la configuration de l'environnement d'exploitation avec les paramètres du terminal déclenchée par la première notification.

Selon une variante, le procédé comprend, après le chargement, la réception d'une requête d'activation du profil issue du serveur distant, et la première notification d'activation est une réponse du module sécurisé via un premier canal sécurisé à la requête d'activation.

Selon une variante, le procédé comprend après la configuration l'exécution d'une procédure d'une deuxième notification de l'activation du profil dans le module sécurisé entre le module sécurisé et le serveur distant.

Selon une variante, le procédé comprend la réception d'une requête de redémarrage du terminal entre la configuration et la procédure de la deuxième notification.

Plus précisément, les paramètres du terminal comprennent au moins le nom d'un point d'accès pour une connexion à un réseau de données du réseau de communication mobile.

Selon une variante, la requête de provisionnement comprend en outre une signature du profil et des paramètres pour une requête d'authentification par le module sécurisé.

De plus, le chargement est opéré après la réception d'une notification d'authentification de la signature.

Selon une variante, la requête de provisionnement est reçue via un deuxième canal sécurisé entre le terminal et le serveur distant, le deuxième canal sécurisé étant un échange de type SMS, CAT_TP ou HTTPS.

Plus précisément, les paramètres sont spécifiques à un identifiant du terminal.

Selon une variante, le procédé comprend en outre, préalablement à la réception, la détermination de l'identifiant du terminal par le module sécurisé et l'envoi de l'identifiant du terminal au serveur distant.

Selon une variante, il comprend en outre, à la suite du chargement, la réception de la notification du chargement du profil issue du module sécurisé, puis la réception d'une requête d'activation du deuxième profil issue du serveur distant.

L'invention prévoit un terminal comprenant un module sécurisé destiné à héberger un profil de souscripteur à un réseau de communication mobile et un environnement d'exploitation du terminal.

Selon l'invention le terminal comprend:
- un moyen de réception d'une requête de provisionnement issue d'un serveur distant comprenant au moins le profil de souscripteur et des paramètres du terminal associés au deuxième profil,
- des moyens de chargement du profil dans le module sécurisé et de réception d'une notification d'activation du profil dans le module sécurisé,
- et un moyen de configuration du terminal avec les paramètres du terminal lorsque la notification d'activation issue du module sécurisé est reçue.

L'invention prévoit également un serveur de provisionnement d'un profil de souscripteur à un réseau de communication mobile comprenant un registre du profil, des moyen de traitement pour initier le provisionnement du profil à un terminal de souscripteur et pour créer une requête de provisionnement et un moyen d'envoi de la requête de provisionnement au terminal.

Selon l'invention, le serveur comprend en outre :
- un registre de paramètres de terminal associés au profil de souscripteur,
- et la requête de provisionnement du terminal comprend au moins le profil d'un souscripteur et des paramètres du terminal associés au profil.

Plus précisément, les paramètres du terminal comprennent au moins le nom des points d'accès pour une connexion à un réseau de données du réseau de communication mobile du profil du souscripteur associé.

Selon une variante, le serveur comprend un moyen de réception d'un identifiant du terminal.

Grâce au procédé de provisionnement selon l'invention le terminal est configuré à la suite de l'activation du profil chargé dans le module sécurisé. La configuration du terminal est déclenchée sur réception de la première notification d'activation du profil issue du module sécurisé vers le terminal.

Ainsi, le terminal est configuré avec les paramètres de l'opérateur du réseau de téléphonie avant l'envoi des notifications d'activation à destination d'un serveur distant de provisionnement ou d'un serveur du réseau de communication de l'opérateur.

Le procédé permet d'assurer que les notifications à destination d'un serveur distant soient émises correctement. Il permet également l'utilisation du réseau de données du nouvel opérateur pour l'envoi de notification d'activation.

D'autres caractéristiques et avantages de la présente invention apparaîtront plus clairement à la lecture de la description détaillée qui suit de modes de réalisation de l'invention donnés à titre d'exemples nullement limitatifs et illustrés par les dessins annexés, dans lesquels :

### Les figures

La figure 1 représente un schéma des communications entre un terminal hébergeant un module sécurisé et le réseau de communication d'un opérateur.
La figure 2 représente plus précisément le serveur de provisionnement des profils de souscripteurs pour le provisionnement d'un module sécurisé.
La figure 3 représente un flux de séquence du procédé de provisionnement du module sécurisé et du terminal.

### Description détaillée d'un exemple de réalisation illustrant l'invention

L'invention s'applique au provisionnement d'un profil de souscripteur à un service et des paramètres du terminal associés au profil du souscripteur. L'invention vise à empêcher des problèmes de correspondance entre le profil du souscripteur au service du terminal et la configuration du terminal. Le propos de l'invention est de décrire le procédé de provisionnement d'un nouveau profil de souscripteur à un terminal mobile ainsi que les paramètres du terminal mobile associés au dit nouveau profil.

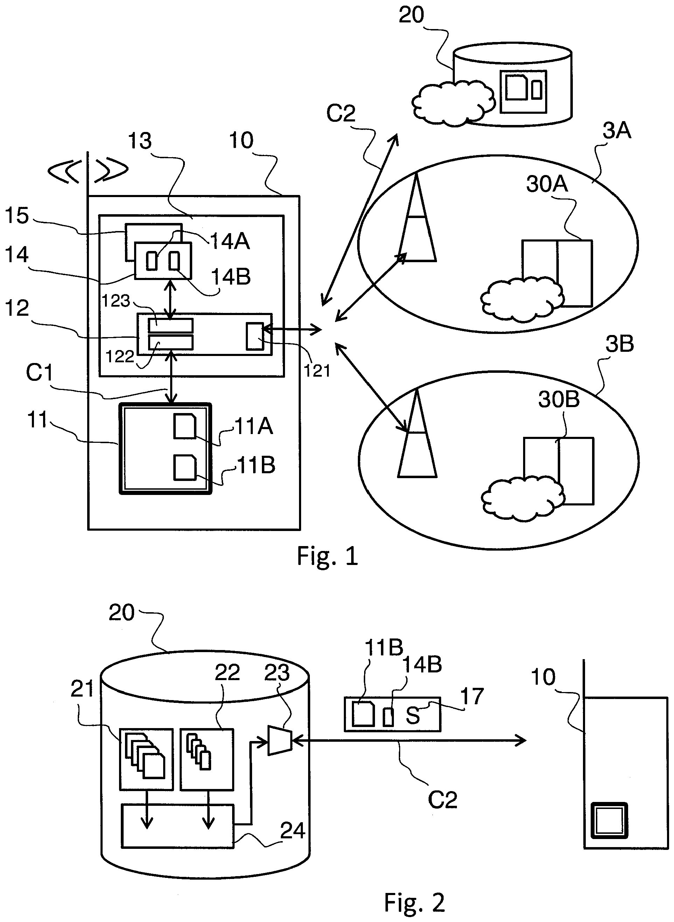

La figure 1 est un schéma d'un mode de réalisation représentant l'écosystème dans lequel l'invention est utilisée. Elle s'applique à un terminal mobile 10 comprenant un module sécurisé 11 destiné à héberger des profils de souscripteur. Dans ce mode de réalisation deux profils 11A, 11B interviennent, le premier profil 11A étant un profil activés dans le module sécurisé et le profil 11B est un profil à provisionner dans le module sécurisé 11 pour remplacer le profil 11A ou pour ajouter un deuxième profil actif.

Le module sécurisé 11 est de préférence un circuit intégré de type UICC pour la réalisation de fonctions cryptographiques permettant notamment l'authentification du module sécurisé 11 à un service 3A, 3B. Le module sécurisé 11 peut être également une zone logicielle et matérielle d'un terminal reconnue comme étant protégée et de confiance, appelée également TEE (pour « Trusted Execution Environment » en anglais). Le module sécurisé 11 communique avec un serveur distant 20 de provisionnement de profils de souscripteur pour recevoir les profils de souscripteur.

On commencera par une description du terminal 10 et du module sécurisé 11. Le terminal 10 est un dispositif de communication mobile, par exemple de type téléphone cellulaire, dispositif de télémétrie embarqué ou installation gérée à distance. Dans ce mode de réalisation, le module sécurisé héberge un premier profil de souscripteur 11A et le terminal est configuré avec des premiers paramètres 14A. Un environnement d'exploitation 13 permet l'opération du terminal 10 et son fonctionnement avec un service 3A d'un opérateur grâce au profil 11A et les paramètres 14A. L'environnement d'exploitation est configuré par des fichiers de configuration et parmi ces fichiers de configurations les paramètres du terminal 14A, 14B associés à aux profils de souscripteur 11A, 11B.

Pour opérer les fonctions de sécurité, le module sécurisé 11 comprend des domaines de sécurité pour la gestion des protocoles de communications avec des entités extérieures, comme par exemple le terminal 10, un serveur distant 20 de provisionnement de profil de souscripteur ou des réseaux de communication mobile, pour la gestion des profils de souscripteur et pour l'hébergement d'identifiant du module sécurisé et de données cryptographiques, comme par exemple un identifiant utilisé à des fins de provisionnement de profils de souscripteur, des clés de personnalisation du module sécurisé, des clés d'authentification et des clés de session.

Le module sécurisé 11 peut être amovible et du format d'une carte SIM destinée à être insérée dans le terminal mobile 10. Le terminal peut être un téléphone cellulaire ou une tablette multimédia. Les services 3A, 3B auxquels s'authentifie le module sécurisé 11 sont dans ce cas-ci des réseaux de communication de téléphonie mobile cellulaire 3A, 3B.

Dans un autre mode de réalisation dit de type M2M, le module sécurisé 11 (de type eUICC) est soudé dans le terminal 10 et est non amovible. Le module sécurisé 11 est un circuit intégré pouvant s'authentifier à un ou des réseaux de communications mobiles 3A, 3B, de type réseaux cellulaires. Le terminal peut être un téléphone cellulaire, un véhicule automobile ou un appareil de télémétrie par exemple.

On notera que les services 3A, 3B peuvent être des services payants nécessitant une authentification de l'utilisateur au moyen d'un profil hébergé dans le module sécurisé, comme par exemple un service audiovisuel payant, de télécommunication par satellite ou un à service de télémétrie exploitant un réseau de données privé.

Dans le cadre des réseaux de communication mobile 3A, 3B, ceux-ci sont exploités par un opérateur et chacun des réseaux offre un serveur de communication de type voix, de type message (SMS, en anglais « Short Message Service ») mais également un réseau de données 30A, 30B. On entend par un réseau de données 30A, 30B d'un opérateur de téléphonie mobile un réseau 2G, 3G, 4G ou LTE. Il s'agit d'un réseau de communication par transmission de paquets de données, de type protocole internet et nécessite un accès à un portail de l'opérateur dont l'adresse doit être connue du terminal 10. Les protocoles de communication des réseaux de données 30A, 30B de type LTE sont définis par des spécifications émises par des organismes de standardisation. Il s'agit par exemple des standards issus de l'ETSI (« European Telecommunication Standards Institute » en anglais) ou de 3GPP (pour « third Génération Partnership Project » en anglais).

L'accès au portail de l'opérateur est renseigné par les paramètres 14A, 14B dans l'environnement d'exploitation 13 du terminal 10. Pour l'accès à un réseau de données 30A, 30B les paramètres 14A, 14B du terminal sont les noms des points d'accès du réseau de l'opérateur, appelées également APN, pour « Access Point Name » en anglais. Les paramètres 14A, 14B peuvent comprendre plusieurs noms de points d'accès avec des privilèges distincts selon les applications utilisées dans le terminal mobile 10.

L'environnement d'exploitation 13 peut être par exemple un environnement de type IOS, Android, Linux (marques déposées) ou tout autre type d'environnement permettant l'opération du terminal 10. L'environnement d'exploitation comporte des fichiers de configuration pour la gestion des paramètres du terminal 10.

Plus précisément, les paramètres 14A, 14B du terminal sont associés au profil du souscripteur hébergé dans le module sécurisé 11. Comme vu précédemment, ils peuvent être les données de points d'accès spécifiques au réseau de communication mobile 3A, 3B de l'opérateur, mais aussi un visuel de l'environnement d'exploitation 13 spécifique à l'opérateur (Logo, couleur, animations, photos par exemple) ou des paramètres associés à une application d'accès à un service de l'opérateur.

On entend que les paramètres 14A, 14B du terminal sont associés au profil de souscripteur 11A, 11B respectivement, notamment parce que les paramètres du terminal 14A ne sont généralement pas compatibles avec le profil de souscripteur 11B et réciproquement les paramètres du terminal 14B ne sont pas compatibles avec le profil 11A. Ce sont des paramètres qui ne sont pas utilisables avec un autre service que celui de l'opérateur. Ces paramètres sont définis par l'opérateur du profil du souscripteur auquel il est associé.

De plus, les paramètres du terminal 14A, 14B et les requêtes de configuration des paramètres 14A, 14B dans le terminal sont spécifiques à l'environnement d'exploitation tournant sur le terminal visé.

En outre, l'environnement d'exploitation 13 héberge un agent de provisionnement 12. L'agent de provisionnement 12 est un intermédiaire de communication entre le serveur distant 20 de provisionnement de profil et le module sécurisé 11. Il permet notamment sur réception de requêtes ou de notifications issues du serveur distant 20 d'exécuter les commandes appropriées entre le terminal 10 et le module sécurisé 11. A l'inverse, sur réception de requêtes ou de notifications issues du module sécurisé 11, il permet d'exécuter les commandes appropriées entre le terminal 10 et le serveur distant 20.

L'agent de provisionnement 12 est une entité du terminal collaborative avec le serveur distant 20. Il est émis et entretenu par la même entité en charge du serveur distant 20. Cette entité peut être l'opérateur d'un service de télécommunication, le fabricant du module sécurisé, le fabricant du terminal ou un opérateur de service tiers. L'agent de provisionnement 12 est une application logicielle hébergée par l'environnement d'exploitation 13 du terminal, de type java par exemple, exploitant les fonctions et méthodes applicatives pour la réception de requêtes, notifications, données et commandes à échanger avec le module sécurisé 11 et le serveur distant 20.

L'agent de provisionnement 12 peut communiquer avec le module sécurisé 11 via un premier canal sécurisé C1. Pour cela, il comprend des moyens de réception et d'envoi de données 122. Il s'agit d'un canal de communication sécurisé comprenant l'utilisation du protocole APDU (pour « Application Protocol Data Unit » en anglais) défini dans la norme ISO/SEC 7816-4. La norme définit les échanges comprenant les requêtes et réponses entre le terminal 10 et le module sécurisé 11. On peut également nommer la norme GlobalPlatform v.2.2.1 qui définit un cadre des échanges pour accéder à des domaines de sécurité d'un module sécurisé. En particulier, la norme définit notamment des commandes APDU pour transmettre des données entre le terminal 10 et le module sécurisé 11, échanges pouvant être initiés d'une application du terminal ou d'un serveur distant de provisionnement de profil.

Le module sécurisé 11, via l'agent de provisionnement 12 peut communiquer avec le serveur distant 20 via un deuxième canal sécurisé C2. Ce deuxième canal sécurisé C2 utilise des SMS, le protocole CAT_TP (pour « Card Application Toolkit Transport Protocol ») ou le protocole HTTPS (pour « HyperText Transfer Protocol Secure »). Par exemple, le module sécurisé 11 et l'agent d'approvisionnement 12 peuvent mettre en oeuvre des protocoles de communications tels que normalisés dans les normes ETSI TS 102 226, 3GPP TS 31.111 ou 3GPP TS 31.116. Le canal sécurisé est par exemple établi par une phase d'authentification mutuelle au moyen de données cryptographiques provisionnées dans un domaine sécurisé du module sécurisé 11.

Dans le cadre d'un provisionnement d'un profil de souscripteur dans le module sécurisé, le serveur 20 ou le module sécurisé 11 initie une procédure d'échange d'un profil de souscripteur. La figure 2 décrit plus précisément les fonctions d'un serveur distant 20 pour provisionner un profil dans un module sécurisé de type eUICC.

Le serveur 20 de gestion d'un profil de souscripteur à un réseau de communication mobile des moyens pour préparer un profil de souscripteur, la requête de provisionnement et les moyens de transmission au module sécurisé 11.

Pour cela, un registre 21 comprenant des profils de souscripteur 11A, 11B à un réseau de communication mobile. Le registre est mis à jour par l'opérateur du réseau de communication mobile. Un profil contient les données utilisées pour le fonctionnement d'un profil de souscripteur pour accéder et utiliser le serveur de l'opérateur, notamment les identifiants du souscripteur au réseau (IMSI, pour « International Mobile Subscriber Identity » en anglais), les clés d'authentification, un domaine de sécurité de l'opérateur, désigné également MNO-SD, une application d'accès au réseau, désignée par NAA pour « Network Access Application ».

Pour un cas de provisionnement dans un module sécurisé soudé au terminal, la structure d'un profil de souscripteur provisionné dans le module sécurisé 11 est désignée par ISD-P (« Issuer Security Domain Profile » en anglais) et est spécifiée dans la norme GSMA « Remote Provisioning Architecture for Embedded UICC Technical Spécification », version 2.0. Le profil de souscripteur contient au moins les informations telles que spécifiées dans la norme GSMA.

Par ailleurs, selon l'invention le serveur 20 comprend un registre 22 de paramètres de terminal 14A, 14B associés au profil d'un souscripteur. Ces paramètres dépendent du modèle de terminal qui est définit en fonction d'un modèle constructeur ou un identifiant de terminal IMEI (« International Mobile Equipment Identity » en anglais) par exemple. L'identifiant est de préférence unique au terminal 10 et peut être attaché à une modèle constructeur spécifique connu du serveur distant 20. Les opérateurs du réseau de communication mobile 3A, 3B établissent les paramètres 14A, 14B associés à leur profil de souscripteur en fonction de l'identifiant du terminal.

De plus, le serveur comprend des moyens de traitement 24 pour initier le provisionnement du profil à un terminal de souscripteur et pour créer une requête de provisionnement d'un profil de souscripteur à destination du module sécurisé. Le provisionnement peut être initié par l'opérateur ou par le souscripteur. Les moyens de préparation de la requête de provisionnement d'un profil de souscripteur sont désignés par SM-DP (pour « Subscription Manager Data Préparation » en anglais) dans la norme GSMA.

Le serveur 20 comprend des moyens 23 pour établir un protocole d'échange sécurisé avec le module sécurisé via le terminal 10. Ces moyens de communication sont désignés dans la norme GSMA par SM-SR (pour « Subscription Manager Secure Routing »). Comme précisé pour le module sécurisé, le serveur 20 peut établir le canal sécurisé C2 avec le module sécurisé 11 de type HTPPS, CAT_TP, SMS. Bien entendu, le terminal 10 et le module sécurisé 11 comprennent les moyens adaptés pour l'opération réciproque du canal sécurisé C2 avec le serveur 20

On notera qu'une entité logicielle réciproque à l'entité SM-SR du serveur est présente dans le module sécurisé 11 pour établir le protocole d'échange. Cette entité est désignée par ISD-R (pour « Issuer Security Domain Root » en anglais) selon la norme GSMA.

Selon l'invention, la requête de provisionnement du terminal comprend au moins le profil d'un souscripteur 11B et des paramètres du terminal 14B associés au profil 11B. Les paramètres du terminal mobile 14A, 14B peuvent être préparés avec le profil de souscripteur 11A, 11B par l'opérateur ou lors de la préparation de la requête de provisionnement au module sécurisé 11 en vue du provisionnement par le SM-DP du serveur.

Par exemple, la requête de provisionnement requière la création d'un profil de souscripteur dans le module sécurisé et peut comprendre pour son exécution la commande APDU « INSTALL COMMAND » à destination du terminal 10 pour l'installation du profil 11B dans le module sécurisé 11. La requête de provisionnement prévoit une réponse du module sécurisé et du statut d'exécution de la commande.

Quel que soit le mode de préparation des paramètres du terminal mobile 14B pour leur provisionnement, il est important de noter que ceux-ci sont envoyés avec la même requête de provisionnement du profil de souscripteur 11B auquel ils sont associés ou pendant le même protocole d'approvisionnement du profil de souscripteur 11B. Ceci permet de provisionner précocement le terminal 10 avec les paramètres correspondant 14B en vue de l'activation du profil provisionné 11B.

On notera par ailleurs que dans une variante la requête de provisionnement peut être accompagnée d'une signature 17 du profil du souscripteur 11B et des paramètres du terminal 14B en vue d'une authentification par le module sécurisé 11.

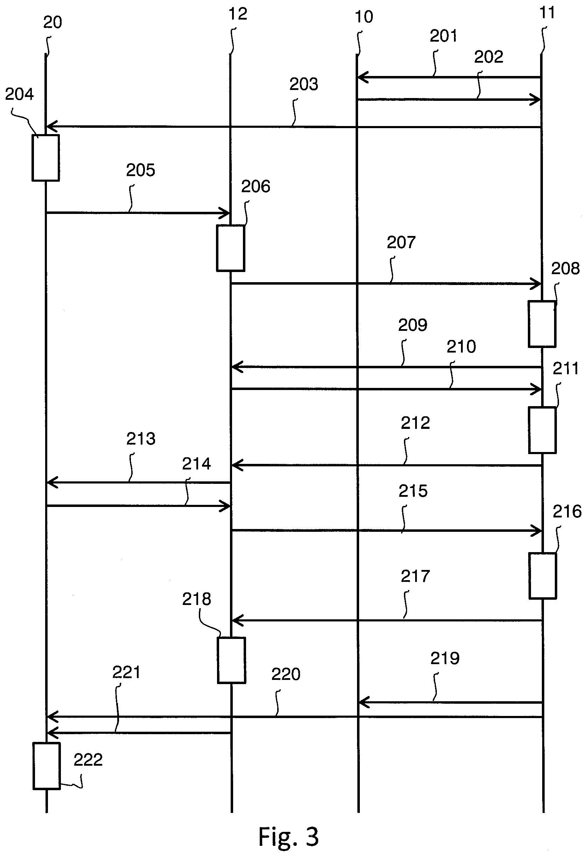

La figure 3 représente le flux de séquence du procédé de provisionnement du profil du souscripteur 11B et des paramètres 14B du terminal. Le module sécurisé 11 contient un profil de souscripteur actif 11A et le terminal mobile 10 est configuré avec des paramètres 14A.

Avant d'amorcer le provisionnement d'un deuxième profil de souscripteur, Il faut s'assurer que le serveur distant 20 est en connaissance du modèle du terminal 10 du souscripteur. L'identifiant du modèle du terminal peut être le numéro IMEI par exemple. Dans un premier cas, le serveur distant 20 a reçu l'information d'identification du terminal 10 par l'opérateur. Dans un deuxième cas, le module sécurisé 11 initie une requête 201 pour recevoir un identifiant du terminal 10. Le terminal 10 transmet l'identifiant du terminal 10 au moyen d'une réponse 202 vers le module sécurisé 11.

Ensuite, le module sécurisé 11 envoie l'identifiant du terminal au serveur distant 20 par un message d'envoi 203, via le canal sécurisé C2.

Le serveur distant 20 traite lors d'une étape 204 le message contenant l'identifiant du terminal et détermine les paramètres du terminal à associer au module sécurisé 11. Le serveur distant 20 dispose d'une base de données d'une pluralité de configuration de paramètres de terminal en fonction d'un opérateur.

Dans une variante du procédé, il peut être prévu que le serveur distant 20 hébergeant les moyens de traitement 24 de la requête de provisionnement (l'entité SM-DP) reçoive les paramètres du terminal 14B via un canal de communication sécurisé d'un autre serveur de l'opérateur du profil de souscripteur.

Lorsque le serveur distant 20 reçoit une demande de provisionnement d'un deuxième profil de souscripteur 11B à charger dans le module sécurisé, une requête de provisionnement est préparée par le serveur distant 20. La requête contient le profil de souscripteur 11B, les paramètres du terminal 14B, ainsi que, mais non obligatoirement, une signature du profil 11B et des paramètres 14B avec un certificat du module sécurisé 11.

Le serveur distant 20 transmet à l'agent de provisionnement 12 la requête de provisionnement 205 via le canal sécurisé C2. L'agent de provisionnement 12 opère la réception de la requête de provisionnement 205 issue du serveur distant 20 comprenant au moins le profil de souscripteur 11B et des paramètres 14B du terminal associés au profil 11B.

A une étape 206, l'agent de provisionnement 12 opère une mémorisation temporaire dans une mémoire volatile du terminal mobile 10 des paramètres du terminal 14B associés au deuxième profil 11B provisionné.

On notera qu'à cette phase le terminal mobile 10 est encore configuré avec les paramètres du terminal 14A associés au profil de souscripteur 11A qui est également activé dans le module sécurisé 11.

Si une signature est présente dans la requête de provisionnement, l'agent de provisionnement 12 effectue une requête d'authentification 207 de la signature auprès du module sécurisé 11.

Le module sécurisé 11 réalise une authentification 208 de la signature du profil de souscripteur 11B et des paramètres du terminal mobile 14B.

En cas d'authentification réussie, le module sécurisé 11 transmet une notification 209 de validation de la signature 17 auprès de l'agent de provisionnement 12. Dans le cas contraire, le procédé de provisionnement est suspendu.

Sur réception de la notification de validation 209, l'agent de provisionnement 12 envoie une requête de chargement 210 du deuxième profil de souscripteur dans le module sécurisé 11. Les paramètres du terminal 14B sont gardés mémorisés dans la mémoire du terminal.

Ensuite, le module sécurisé 11 réalise l'installation 211, dans des fichiers de configuration, des informations du profil de souscripteur 11B. Lors de cette étape 211, un domaine sécurisé de type ISD-P propre au profil de souscripteur 11B est installé dans le module sécurisé 11.

Une notification 212 du statut du chargement du profil de souscripteur 11b est transmise à destination de l'agent de provisionnement 12. La notification 212 est une réponse à la requête 210. Il est également prévu une notification 213 de réponse de l'exécution du chargement vers le serveur distant 20 issue de l'agent de provisionnement 12 via le canal sécurisé C2. Les notifications 212, 213 informe le terminal et le serveur distant 20 du statut du chargement du profil 14B dans le module sécurisé.

Sur réception d'une notification 213 d'un chargement valide, le serveur 20 transmet une requête d'activation 214 d'une part du profil de souscripteur 11B dans le module sécurisé 11 et d'autres part des paramètres 14B du terminal à destination de l'agent de provisionnement 12. La requête d'activation 214 peut comprendre une commande APDU à exécuter par le terminal de type STORE DATA contenant les instructions d'activation à destination du module sécurisé 11 pour activer le profil de souscripteur 11B. Une telle requête peut prévoir une réponse de statut de l'exécution de l'activation. La requête d'activation 214 contient également les instructions pour que l'agent de provisionnement 12 réalise la configuration des paramètres du terminal 14B.

La requête d'activation 214 peut être émise, via le canal sécurisé C2, immédiatement en réponse à la réception de la notification de chargement 213 ou être émise sous validation d'une condition supplémentaire, par exemple une durée ou un ordre d'activation.

Ensuite, l'agent de provisionnement 12 transmet une requête d'activation 215 du profil de souscripteur 11B à destination du module sécurisé 11. Il s'agit de l'exécution de la commande APDU contenue dans la requête 214. Les instructions pour que l'agent de provisionnement 12 réalise la configuration des paramètres du terminal 14B est en attente.

Le module sécurisé 11 réalise ensuite l'opération d'activation 216 du profil de souscription 11B, cette opération est décrite par exemple dans la norme GSMA précitée. A cette phase, le profil de souscripteur 11B est activé dans le module sécurisé, dans le cas contraire le procédé de provisionnement est suspendu. Cette opération peut prévoir la désactivation du profil de souscripteur 11A. De plus, cette opération prévoit la réponse du module sécurisé 11 à la commande d'activation 214 issue du serveur 20 contenant le statut de l'opération d'activation dans le module sécurisé 11.

La notification d'activation 217 est transmise à l'agent de provisionnement 12. Cette notification peut prévoir également une notification à envoyer au serveur 20. La notification 217 est reçue du module sécurisé 11 via le canal sécurisé C1. Cette notification est la réponse à la commande d'activation 214 issue du serveur 20 comprenant le statut de l'opération d'activation.

Sur réception de cette notification, l'agent de provisionnement 12 opère la configuration 218 de l'environnement du terminal 10 avec les paramètres 14B. Les paramètres 14B sont des paramètres pour la réalisation d'un accès à un service associé à l'opérateur du profil de souscripteur 11B qui est activé. Par exemple, le nom du point d'accès à un réseau de données de l'opérateur du profil de souscripteur 11B est configuré dans l'environnement 13 du terminal 10. Les paramètres du terminal 14A associés au profil 11A qui vient d'être désactivé sont désactivés. Si le profil 11A n'a pas été désactivé, les paramètres 14A sont maintenus actifs dans le terminal 10.

La configuration 218 déclenchée par la notification 217 permet de garantir que le terminal soit configuré avec la configuration compatible au profil activé dans le module sécurisé. La configuration est réalisée avant l'envoi d'une notification d'activation au serveur distant 20 ou à un réseau de communication 3B de l'opérateur.

Une fois la configuration 218 du terminal 10 réalisée avec les paramètres 14B, le module sécurisé 11 envoie ensuite une requête de redémarrage 219 du terminal 10 à l'environnement d'exploitation du terminal. Cela peut être la commande proactive APDU REFRESH. La commande opère l'exécution d'une procédure d'accrochage au réseau 3B du profil activé dans le module sécurisé.

Le procédé comprend ensuite une procédure de notification 220 d'activation entre le serveur distant 20 et le module sécurisé 11 via le canal sécurisé C2. Le procédé de notification 220 valide l'installation du deuxième profil 11B dans le module sécurisé réciproquement avec le serveur distant 20 de provisionnement de profil. Cette procédure de notification prévoit l'échange de messages et peut exécuter l'effacement du premier profil de souscripteur 11A si celui-ci a été désactivé. On notera que cette étape de notification est conforme à la procédure d'installation d'un nouveau profil dans le module sécurisé selon la norme GSMA précitée.

En variante, la procédure de notification 220 est opérée entre le module sécurisé 11 et un serveur distant du réseau de communication de l'opérateur du profil 11B. La procédure de notification utilise par exemple l'accès au réseau de données configuré par les paramètres 14B.

Il est prévu également suite à la configuration 218 du terminal une notification d'activation 221 des paramètres de terminal 14B dans l'environnement d'exploitation 13 du terminal 10 issue du terminal vers le serveur distant 20. La notification 221 est associée à la notification 217. La notification 221 est la réponse de statut de l'opération d'activation du profil 11B dans le module sécurisé 11. Grâce à l'invention, cette notification peut par exemple être émise via le réseau de données dont l'accès est paramétré par les paramètres 14B.

Sur réception des notifications d'activation suivant la configuration 218, le serveur distant 20 met à jour ses registres 21, 22 pour renseigner le profil de souscripteur actif dans le module sécurisé 11 et les paramètres de terminal configurés dans le terminal 10.

Grâce à l'invention, le procédé de provisionnement garantit que le terminal est configuré avec les paramètres de l'opérateur avant l'envoi des notifications 220 et 221 au serveur distant 20 (ou à un serveur distant du réseau de communication de l'opérateur). On assure la correspondance des configurations des serveurs distants et du terminal. La continuité de service est également assurée.

## Revendications

1. Procédé de provisionnement d'un profil de souscripteur à un terminal (10) comprenant un module sécurisé (11) destiné à héberger le profil de souscripteur (11B) à un réseau de communication mobile (3B) et un environnement d'exploitation (13) du terminal (10), **caractérisé en ce qu'**il comprend les étapes successives suivantes exécutées par le terminal (10):
- la réception d'une requête de provisionnement (205) issue d'un serveur distant (20) comprenant au moins le profil de souscripteur (11B) et des paramètres (14B) du terminal associés au profil (11B),
- le chargement (210) du profil de souscripteur (11B) dans le module sécurisé (11),
- suite audit chargement, la réception d'une notification (212) du chargement (210) du profil de souscripteur (11B) issue du module sécurisé (11) et l'envoi d'une notification (213) informant le serveur distant (20) dudit chargement,
- la réception d'une requête d'activation (214) dudit profil (11B) issue du serveur distant (20),
- la réception d'une première notification de l'activation (217) du profil (11B) dans le module sécurisé (11) issue du module sécurisé (11),
- la configuration (218) de l'environnement d'exploitation (13) avec les paramètres du terminal (14B) déclenchée par la première notification (217).

2. Procédé selon la revendication 1, **caractérisé en ce que** la première notification d'activation (217) est une réponse du module sécurisé (11) via un premier canal sécurisé (C1) à la requête d'activation (215).

3. Procédé selon l'une quelconque des revendications 1 à 2, **caractérisé en ce qu'**il comprend après la configuration (218) l'exécution d'une procédure d'une deuxième notification (220) de l'activation du profil (11B) dans le module sécurisé (10) entre le module sécurisé (11) et le serveur distant (20).

4. Procédé selon la revendication 3, **caractérisé en ce qu'**il comprend la réception d'une requête de redémarrage du terminal (219) entre la configuration (218) et la procédure de la deuxième notification (220).

5. Procédé selon l'une quelconque des revendications 1 à 4, **caractérisé en ce que** les paramètres du terminal (14B) comprennent au moins le nom d'un point d'accès pour une connexion à un réseau de données (30B) du réseau de communication mobile (3B).

6. Procédé selon l'une quelconque des revendications 1 à 5, **caractérisé en ce que** la requête de provisionnement comprend en outre une signature (17) du profil (11B) et des paramètres (14B) pour une requête d'authentification (207) par le module sécurisé (11).

7. Procédé selon la revendication 6, **caractérisé en ce que** le chargement (210) est opéré après la réception d'une notification d'authentification (209) de la signature (17).

8. Procédé selon l'une quelconque des revendications 1 à 7, **caractérisé en ce que** la requête de provisionnement est reçue via un deuxième canal sécurisé (C2) entre le terminal (10) et le serveur distant (20), le deuxième canal sécurisé étant un échange de type SMS, CAT_TP ou HTTPS.

9. Procédé selon la revendication 8, **caractérisé en ce que** les paramètres (14B) sont spécifiques à un identifiant du terminal (10).

10. Procédé selon la revendication 9, **caractérisé en ce qu'**il comprend en outre, préalablement à la réception (205), la détermination (202) de l'identifiant du terminal (10) par le module sécurisé (11) et l'envoi (203) de l'identifiant du terminal (10) au serveur distant (20).

11. Terminal (10) comprenant un module sécurisé (11) destiné à héberger un profil de souscripteur (11B) à un réseau de communication mobile (3B) et un environnement d'exploitation (13) du terminal (10), **caractérisé en ce qu'**il comprend :
- un moyen de réception (121) d'une requête de provisionnement issue d'un serveur distant (20) comprenant au moins le profil de souscripteur (11B) et des paramètres (14B) du terminal (10) associés audit profil, ledit moyen de réception recevant en outre une requête d'activation (214) dudit profil (11B) issue du serveur distant (20) ;
- des moyens de chargement du profil (11B) dans le module sécurisé (11) et de réception d'une notification d'activation (217) du profil (11B) dans le module sécurisé (11),
- des moyens pour recevoir, suite au chargement du profil de souscripteur (11B), une notification (212) du chargement (210) du profil de souscripteur (11B) issue du module sécurisé (11), et pour envoyer une notification (213) informant le serveur distant (20) dudit chargement,
- et un moyen de configuration du terminal (10) avec les paramètres du terminal (14B) lorsque la notification d'activation (217) issue du module sécurisé (11) est reçue.

12. Serveur de provisionnement (20) d'un profil de souscripteur (11B) à un réseau de communication mobile (3B) comprenant un registre (21) du profil, des moyen de traitement (24) pour initier le provisionnement du profil à un terminal de souscripteur et pour créer une requête de provisionnement et une requête d'activation (214) dudit profil et un moyen d'envoi (23) de la requête de provisionnement et de la requête d'activation au terminal, comprenant en outre :
- un registre (22) de paramètres de terminal (14A, 14B) associés au profil de souscripteur,
- en ce que la requête de provisionnement du terminal comprend au moins le profil d'un souscripteur (11B) et des paramètres du terminal (14B) associés au profil (11B),
le serveur étant configuré pour envoyer au terminal la requête d'activation (214) dudit profil suite à la réception d'une notification (213) du terminal informant le serveur distant (20) du chargement du profil de souscripteur (11B) dans le module sécurisé (11).

13. Serveur selon la revendication 12, **caractérisé en ce que** les paramètres du terminal (14B) comprennent au moins le nom des points d'accès pour une connexion à un réseau de données (30B) du réseau de communication mobile (3B) du profil du souscripteur associé.

14. Serveur selon la revendication 13, **caractérisé en ce qu'**il comprend un moyen de réception d'un identifiant du terminal (10).

## Patentansprüche

1. Verfahren zur Bereitstellung eines Teilnehmerprofils an ein Endgerät (10) umfassend ein sicheres Modul (11), das dazu bestimmt ist, das Teilnehmerprofil (11B) für ein mobiles Kommunikationsnetz (3B) und eine Betriebsumgebung (13) des Endgeräts (10) zu hosten, **dadurch gekennzeichnet, dass** es die folgenden Schritte umfasst, die der Reihe nach von dem Endgerät (10) ausgeführt werden:
- den Empfang einer Bereitstellungsanforderung (205), die von einem Remote-Server (20) ausgegeben wird, umfassend zumindest das Teilnehmerprofil (11B) und Parameter (14B) des Endgeräts, die dem Profil (11B) zugeordnet sind,
- die Ladung (210) des Teilnehmerprofils (11B) in das sichere Modul (11),
- auf die Ladung folgend den Empfang einer Benachrichtigung (212) über die Ladung (210) des Teilnehmerprofils (11B), die von dem sicheren Modul (11) ausgegeben wird, und die Übertragung einer Benachrichtigung (213), die den Remote-Server (20) über die Ladung informiert,
- den Empfang einer Aktivierungsanforderung (214) des Profils (11B), die von dem Remote-Server (20) ausgegeben wird,
- den Empfang einer ersten Benachrichtigung über die Aktivierung (217) des Profils (11B) in dem sicheren Modul (11), die von dem sicheren Modul (11) ausgegeben wird,
- die Konfiguration (218) der Betriebsumgebung (13) mit den Parametern des Endgeräts (14B), die durch die erste Benachrichtigung (217) ausgelöst wird.

2. Verfahren nach Anspruch 1, **dadurch gekennzeichnet, dass** die erste Aktivierungsbenachrichtigung (217) eine Antwort des sicheren Moduls (11) auf die Aktivierungsanforderung (215) über einen ersten sicheren Kanal (C1) ist.

3. Verfahren nach einem der Ansprüche 1 und 2, **dadurch gekennzeichnet, dass** es nach der Konfiguration (218) die Ausführung einer Prozedur für eine zweite Benachrichtigung (220) über die Aktivierung des Profils (11B) in dem sicheren Modul (10) zwischen dem sicheren Modul (11) und dem Remote-Server (20) umfasst.

4. Verfahren nach Anspruch 3, **dadurch gekennzeichnet, dass** es den Empfang einer Anforderung für einen Neustart des Endgeräts (219) zwischen der Konfiguration (218) und der Prozedur für die zweite Benachrichtigung (20) umfasst.

5. Verfahren nach einem der Ansprüche 1 bis 4, **dadurch gekennzeichnet, dass** die Parameter des Endgeräts (14B) zumindest den Namen eines Zugangspunkts für eine Verbindung mit einem Datennetz (30B) des mobilen Kommunikationsnetzes (3B) umfassen.

6. Verfahren nach einem der Ansprüche 1 bis 5, **dadurch gekennzeichnet, dass** die Bereitstellungsanforderung ferner eine Signatur (17) des Profils (11B) und der Parameter (14B) für eine Authentifizierungsanforderung (207) von dem sicheren Modul (11) umfasst.

7. Verfahren nach Anspruch 6, **dadurch gekennzeichnet, dass** die Ladung (210) nach dem Empfang einer Authentifizierungsbenachrichtigung (209) der Signatur (17) ausgeführt wird.

8. Verfahren nach einem der Ansprüche 1 bis 7, **dadurch gekennzeichnet, dass** die Bereitstellungsanforderung über einen zweiten sicheren Kanal (C2) zwischen dem Endgerät (10) und dem Remote-Server (20) empfangen wird, wobei der zweite sichere Kanal ein Austausch vom Typ SMS, CAT_TP oder HTTPS ist.

9. Verfahren nach Anspruch 8, **dadurch gekennzeichnet, dass** die Parameter (14B) spezifisch für einen Identifikator des Endgeräts (10) sind.

10. Verfahren nach Anspruch 9, **dadurch gekennzeichnet, dass** es ferner vor dem Empfang (205) die Bestimmung (202) des Identifikators des Endgeräts (10) durch das sichere Modul (11) und die Übertragung (203) des Identifikators des Endgeräts (10) an den Remote-Server (20) umfasst.

11. Endgerät (10), umfassend ein sicheres Modul (11), das dazu bestimmt ist, ein Teilnehmerprofil (11B) für ein mobiles Kommunikationsnetz (3B) und eine Betriebsumgebung (13) des Endgeräts (10) zu hosten, **dadurch gekennzeichnet, dass** es umfasst:
- ein Mittel (121) für den Empfang einer Bereitstellungsanforderung, die von einem Remote-Server (20) ausgegeben wird, umfassend zumindest das Teilnehmerprofil (11B) und Parameter (14B) des Endgeräts (10), die dem Profil zugeordnet sind, wobei das Mittel für den Empfang ferner eine Aktivierungsanforderung (214) des Profils (11B) empfängt, die von dem Remote-Server (20) ausgegeben wird,
- Mittel zur Ladung des Profils (11B) in das sichere Modul (11) und für den Empfang einer Aktivierungsbenachrichtigung (217) des Profils (11B) in dem sicheren Modul (11),
- Mittel, um auf die Ladung des Teilnehmerprofils (11B) folgend eine Benachrichtigung (212) über die Ladung (210) des Teilnehmerprofils (11B), die von dem sicheren Moduls (11) ausgegeben wird, zu empfangen, und um eine Benachrichtigung (213) zu übertragen, die den Remote-Server (20) über die Ladung informiert,
- und ein Mittel zur Konfiguration des Endgeräts (10) mit den Parametern des Endgeräts (14B), wenn die Aktivierungsbenachrichtigung (217), die von dem sicheren Modul (11) ausgegeben wird, empfangen wird.

12. Server zur Bereitstellung (20) eines Teilnehmerprofils (11B) an ein mobiles Kommunikationsnetz (3B), umfassend ein Register (21) für das Profil, Verarbeitungsmittel (24), um die Bereitstellung des Profils an ein Teilnehmer-Endgerät auszulösen und um eine Bereitstellungsanforderung und eine Aktivierungsanforderung (214) für das Profil zu erzeugen, und ein Mittel zur Übertragung (23) der Bereitstellungsanforderung und der Aktivierungsanforderung an das Endgerät, ferner umfassend:
- ein Register (22) für Parameter des Endgeräts (14A, 14B), die dem Teilnehmerprofil zugeordnet sind,
- und dass die Bereitstellungsanforderung des Endgeräts zumindest das Profil (11B) eines Teilnehmers und Parameter des Endgeräts (14B), die dem Profil (11B) zugeordnet sind, umfasst,
wobei der Server dazu ausgestaltet ist, auf den Empfang einer Benachrichtigung (213) des Endgeräts folgend, die den Remote-Server (20) über die Ladung des Teilnehmerprofils (11B) in das sichere Modul (11) informiert, die Aktivierungsanforderung (214) des Profils an das Endgerät zu übertragen.

13. Server nach Anspruch 12, **dadurch gekennzeichnet, dass** die Parameter des Endgeräts (14B) zumindest den Namen von Zugangspunkten für eine Verbindung mit einem Datennetz (30B) des mobilen Kommunikationsnetzes (3B) für das zugeordnete Teilnehmerprofil umfassen.

14. Server nach Anspruch 13, **dadurch gekennzeichnet, dass** er ein Mittel für den Empfang eines Identifikators des Endgeräts (10) umfasst.

## Claims

1. A provision method for a subscriber profile to a terminal (10) comprising a secure module (11) intended to host the subscriber profile (11B) to a mobile communication network (3B) and an operating environment (13) of the terminal (10), **characterized in that** it comprises the following successive steps executed by the terminal (10):
- receiving a provision request (205) from a remote server (20) comprising at least the subscriber profile (11B) and parameters (14B) of the terminal associated with the profile (11B),
- loading (210) the subscriber profile (11B) in the secure module (11),
- after said loading, receiving a notification (212) of the loading (210) of the subscriber profile (11B) from the secure module (11) and sending a notification (213) informing the remote server (20) of said loading,
- receiving an activation request (214) of said profile (11B) from said remote server (20),
- receiving a first notification of the activation (217) of the profile (11B) in the secure module (11) from the secure module (11),
- configuring (218) the operating environment (13) with the parameters of the terminal (14B) triggered by the first notification (217).

2. The method according to claim 1, **characterized in that** the first activation notification (217) is a response by the secure module (11) via a first secure channel (C1) to the activation request (215).

3. The method according to any one of claims 1 to 2, **characterized in that** it comprises, after the configuration (218), the execution of a procedure for a second notification (220) of the activation of the profile (11B) in the secure module (10) between the secure module (11) and the remote server (20).

4. The method according to claim 3, **characterized in that** it comprises the reception of a restart request of the terminal (219) between the configuration (218) and the procedure of the second notification (220).

5. The method according to any one of claims 1 to 4, **characterized in that** the parameters of the terminal (14B) comprise at least the name of an access point for a connection to a data network (30B) of the mobile communication network (3B).

6. The method according to any one of claims 1 to 5, **characterized in that** the provision request further comprises a signature (17) of the profile (11B) and parameters (14B) for an authentication request (207) by the secure module (11).

7. The method according to claim 6, **characterized in that** the loading (210) is done after the reception of an authentication notification (209) of the signature (17).

8. The method according to any one of claims 1 to 7, **characterized in that** the provision request is received via a second secure channel (C2) between the terminal (10) and the remote server (20), the second secure channel being an exchange of the SMS, CAT_TP or HTTPS type.

9. The method according to claim 8, **characterized in that** the parameters (14B) are specific to an identifier of the terminal (10).

10. The method according to claim 9, **characterized in that** it further comprises, before reception (205), the determination (202) of the identifier of the terminal (10) by the secure module (11) and the sending (203) of the identifier of the terminal (10) to the remote server (20).

11. A terminal (10) comprising a secure module (11) intended to host a subscriber profile (11B) to a mobile communication network (3B) and an operating environment (13) of the terminal (10), **characterized in that** it comprises:
- a receiving means (121) for a provision request from a remote server (20) comprising at least the subscriber profile (11B) and parameters (14B) of the terminal (10) associated with said profile, said receiving means further receiving an activation request (214) of said profile (11B) coming from the remote server (20);
- means for loading the profile (11B) in the secure module (11) and receiving an activation notification (217) of the profile (11B) in the secure module (11),
- means for receiving, after the loading of the subscriber profile (11B), a notification (212) of the loading (210) of the subscriber profile (11B) coming from the secure module (11), and for sending a notification (213) informing the remote server (20) of said loading,
- and a means for configuring the terminal (10) with the parameters of the terminal (14B) when the activation notification (217) coming from the secure module (11) is received.

12. A server (20) for providing a subscriber profile (11B) to a mobile communication network (3B) comprising a register (21) of the profile, processing means (24) for initiating the provision of the profile to a subscriber terminal and for creating a provision request and an activation request (214) of said profile and a means for sending (23) the provision request and the activation request to the terminal, further comprising:
- a register (22) of terminal parameters (14A, 14B) associated with the subscriber profile,
- in that the provision request of the terminal comprises at least the profile of a subscriber (11B) and parameters of the terminal (14B) associated with the profile (11B),
the server being configured to send the terminal the activation request (214) of said profile after receiving a notification (213) from the terminal informing the remote server (20) of the loading of the subscriber profile (11B) in the secure module (11).

13. The server according to claim 12, **characterized in that** the parameters of the terminal (14B) comprise at least the name of the access points for a connection to a data network (30B) of the mobile communication network (3B) of the profile of the associated subscriber.

14. The server according to claim 13, **characterized in that** it comprises a means for receiving an identifier of the terminal (10).
